(19) Europäisches Patentamt
European Patent Office
Office européen des brevets

(11) EP 3 766 939 A1

(12) **EUROPEAN PATENT APPLICATION**
published in accordance with Art. 153(4) EPC

(43) Date of publication:
**20.01.2021 Bulletin 2021/03**

(21) Application number: **19767761.0**

(22) Date of filing: **08.03.2019**

(51) Int Cl.:
***C08L 69/00*** *(2006.01)*
***C08K 5/3435*** *(2006.01)*
***C08L 33/04*** *(2006.01)*
***C08L 51/04*** *(2006.01)*
***C08L 51/08*** *(2006.01)*

(86) International application number:
**PCT/JP2019/009302**

(87) International publication number:
**WO 2019/176763 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2018 JP 2018049691**

(71) Applicant: **Techno-UMG Co., Ltd.**
**Tokyo 105-0021 (JP)**

(72) Inventor: **KAKIMOTO, Yuuki**
**Ube-shi, Yamaguchi 755-8580 (JP)**

(74) Representative: **Vossius & Partner**
**Patentanwälte Rechtsanwälte mbB**
**Siebertstrasse 3**
**81675 München (DE)**

# (54) THERMOPLASTIC RESIN COMPOSITION AND MOLDED ARTICLE THEREOF

(57) A thermoplastic resin composition contains an aromatic polycarbonate resin (A), a graft copolymer (B) prepared by graft-polymerizing one or more vinyl-based monomers (Y) onto a rubbery polymer (X), and a (meth)acrylate-based copolymer (C) prepared by polymerizing a vinyl-based monomer mixture (m1) containing a (meth)acrylate-based monomer. In the thermoplastic resin composition, preferably, 25 to 80 parts by mass of the aromatic polycarbonate resin (A), 10 to 30 parts by mass of the graft copolymer (B), and 10 to 45 parts by mass of the (meth)acrylate-based copolymer (C) are contained, based on 100 parts by mass in total of the aromatic polycarbonate resin (A), the graft copolymer (B), and the (meth)acrylate-based copolymer (C). A thermoplastic resin-molded article is obtained by molding the thermoplastic resin composition.

EP 3 766 939 A1

## Description

Technical Field

The present invention relates to a thermoplastic resin composition excellent in color developability, impact resistance, and other properties, and a molded article thereof.

In this specification, "(meth)acrylic acid" refers to one or both of "acrylic acid" and "methacrylic acid". The same applies to "(meth)acrylate".

Background Art

Aromatic polycarbonate resins have excellent transparency, impact resistance, heat resistance, and other properties. Molded articles thereof have excellent dimensional stability and so forth. Aromatic polycarbonate resins are thus widely used as raw materials for producing housings for electric and electronic devices, automotive components, and precise molded articles, such as optical disc-related components. In particular, in the case of housings and so forth for electrical household appliances, electronic devices, and image display devices, products with high commercial value have been produced by taking advantage of their beautiful appearances.

Aromatic polycarbonate resins disadvantageously have low flowability and low formability. Thus, methods for alloying aromatic polycarbonate resins with other resins are often employed. For example, resins (hereinafter, referred to as "PC/ABS resins") prepared by alloying aromatic polycarbonate resins with acrylonitrile butadiene styrene (ABS) resins to improve flowability and formability have excellent mechanical properties and thermal properties and thus are widely used in various fields, such as office automation apparatus fields, electronic and electrical apparatus fields, and automotive fields.

However, PC/ABS resins have the disadvantage that color developability (coloration properties) originally possessed by aromatic polycarbonate resins are deteriorated by alloying aromatic polycarbonate resins with ABS resins. It is difficult for PC/ABS resins to meet the requirement of color developability (coloration properties), which has recently been receiving attention in the market as coating-less products.

As a method for enhancing the color developability (coloration properties) of PC/ABS resins, it has been reported that excellent appearance and color developability, which are features of (meth)acrylate-based resins, are imparted by blending (meth)acrylate-based resins represented by poly(methyl methacrylate) (PMMA) with PC/ABS resins. However, blending (meth)acrylate-based resins causes problems of significant decreases in impact resistance and heat resistance.

PTL 1 describes a method in which a poly(methyl methacrylate) (PMMA) is blended with a PC/ABS resin and further describes an improvement in impact resistance by blending with an elastomer. In the case where PMMA, which is excellent in color developability (coloration properties), is blended with a PC/ABS resin, which is excellent in impact resistance and heat resistance, color developability (coloration properties) can be imparted; however, impact resistance is significantly decreased. Thus, in PTL 1, the decrease in impact resistance is improved by blending with the elastomer. However, blending the elastomer may deteriorate the color developability, which is a characteristic of PMMA.

The impact resistance and the color developability (coloration properties) of PC/ABS resins are in a trade-off relationship. It is difficult to achieve high levels of both under present circumstances.

A polymer alloy prepared by blending a (meth)acrylate-based resin, such as PMMA, with a PC/ABS resin have excellent weather resistance and color developability. However, the polymer alloy has the disadvantages as follows: When the polymer alloy is excessively exposed to light containing ultraviolet radiation, the surface of a molded article is apt to turn yellow. The resin is decomposed by ultraviolet radiation to significantly decrease the strength of the molded article. Additionally, the resin is disadvantageously hydrolyzed at high temperatures and high humidity to cause a marked decrease in molecular weight. Furthermore, blending a poly(methyl methacrylate) (PMMA) for weather resistance and color developability may disadvantageously cause a significant decrease in impact resistance.

Regarding a technique for resolving yellowish discoloration due to ultraviolet radiation, typically, studies of the addition of a benzotriazole-based ultraviolet absorber or hindered amine-based light stabilizer have been conducted. In particular, hindered amine-based light stabilizers seem to be highly effective in suppressing yellowish discoloration. Hindered amine-based light stabilizers, however, have the disadvantage that they react with polycarbonate resins to promote hydrolysis during granulating and forming.

PTL 2, although a hindered amine-based light stabilizer is added to improve the weather resistance, no consideration is given to hydrolysis resistance.

It is very difficult to provide weather resistance, hydrolysis resistance, and physical properties such as impact resistance without trade-offs under present circumstances.

PTL 1: JP2012-131908A
PTL 2: JP6298935B

## Summary of Invention

The present invention aims to achieve high levels of both impact resistance and color developability (coloration properties), which have been traditionally considered difficult to achieve high levels of both, in a PC/ABS resin and to provide a thermoplastic resin composition having excellent color developability, impact resistance, heat resistance, and stiffness, and a molded article thereof.

The present invention also aims to achieve high levels of weather resistance, hydrolysis resistance, and physical properties such as impact resistance, which have been traditionally considered difficult to achieve high levels of these properties, and to provide a thermoplastic resin composition having excellent color developability, impact resistance, durability such as hydrolysis resistance, and weather resistance, and a molded article thereof.

The inventors have found that a thermoplastic resin composition having excellent color developability, impact resistance, heat resistance, and stiffness can be provided by mixing an aromatic polycarbonate resin (A) and a graft copolymer (B) with a (meth)acrylate-based copolymer (C) obtained by polymerizing a vinyl-based monomer mixture (m1) containing a (meth)acrylate-based monomer.

The inventors have also found that a thermoplastic resin composition having excellent color developability, impact resistance, durability, and weather resistance can be provided by mixing an aromatic polycarbonate resin (A) and a graft copolymer (B) with a (meth)acrylate-based copolymer (C) obtained by polymerizing a vinyl-based monomer mixture (m1) containing a (meth)acrylate-based monomer and adding a hindered amine-based light stabilizer, in particular, a NO-alkyl-type hindered amine-based light stabilizer (D) thereto.

The gist of the present invention is described below.

[1] A thermoplastic resin composition, comprising an aromatic polycarbonate resin (A), a graft copolymer (B) prepared by graft-polymerizing one or more vinyl-based monomers (Y) onto a rubbery polymer (X), and a (meth)acrylate-based copolymer (C) prepared by polymerizing a vinyl-based monomer mixture (m1) containing a (meth)acrylate-based monomer.

[2] The thermoplastic resin composition according to [1], wherein the vinyl-based monomer mixture (m1) contains an N-substituted maleimide-based monomer and/or an aromatic vinyl-based monomer.

[3] The thermoplastic resin composition according to [1] or [2], wherein 25 to 80 parts by mass of the aromatic polycarbonate resin (A), 10 to 30 parts by mass of the graft copolymer (B), and 10 to 45 parts by mass of the (meth)acrylate-based copolymer (C) are contained, based on 100 parts by mass in total of the aromatic polycarbonate resin (A), the graft copolymer (B), and the (meth)acrylate-based copolymer (C).

[4] The thermoplastic resin composition according to any one of [1] to [3], wherein the (meth)acrylate-based monomer is contained in an amount of 52% to 92% by mass based on 100% by mass in total of the vinyl-based monomer mixture (m1) .

[5] The thermoplastic resin composition according to any one of [1] to [4], wherein the rubbery polymer (X) is a silicone/acrylic-based composite rubber, and the vinyl-based monomers (Y) contain an aromatic vinyl-based monomer and a vinyl cyanide-based monomer.

[6] The thermoplastic resin composition according to any one of [1] to [5], further comprising a NO-alkyl-type hindered amine-based light stabilizer (D).

[7] The thermoplastic resin composition according to [6], wherein an alkoxy group bonded to a nitrogen atom of the NO-alkyl-type hindered amine-based light stabilizer (D) has 5 to 15 carbon atoms, and the NO-alkyl-type hindered amine-based light stabilizer (D) has a molecular weight of 500 to 1,000.

[8] The thermoplastic resin composition according to [6]or [7], wherein the NO-alkyl-type hindered amine-based light stabilizer (D) is contained in an amount of 0.1 to 0.8 parts by mass based on 100 parts by mass in total of the aromatic polycarbonate resin (A), the graft copolymer (B), and the (meth)acrylate-based copolymer (C).

[9] A thermoplastic resin-molded article obtained by molding the thermoplastic resin composition according to any one of [1] to [8].

## Advantageous Effects of Invention

According to the thermoplastic resin composition containing the aromatic polycarbonate resin (A), the graft copolymer (B), and the (meth)acrylate-based copolymer (C) of the present invention, it is possible to provide a thermoplastic resin composition having excellent color developability, impact resistance, heat resistance, and stiffness, and a molded article thereof. The thermoplastic resin-molded article of the present invention enables a wide variety of products to have excellent designs without painting because of its excellent color developability, impact resistance, heat resistance, and stiffness.

According to the thermoplastic resin composition further containing the NO-alkyl-type hindered amine-based light stabilizer (D) of the present invention, it is possible to provide a thermoplastic resin composition having excellent

color developability, impact resistance, durability, and weather resistance, and a molded article thereof. The thermoplastic resin-molded article of the present invention enables a wide variety of products to have excellent designs and high durability without painting because of its excellent color developability, impact resistance, durability such as hydrolysis resistance, and weather resistance.

Description of Embodiments

Embodiments of the present invention will be described in detail below.

[Thermoplastic Resin Composition]

A thermoplastic resin composition of the present invention contains, as essential components, an aromatic polycarbonate resin (A), a graft copolymer (B), and a (meth)acrylate-based copolymer (C) described below and may further contain a NO-alkyl-type hindered amine-based light stabilizer (D).

<Aromatic Polycarbonate Resin (A)>

The aromatic polycarbonate resin (A) is a polymer having a basic structure containing a carbonate bond represented by a general formula -(-O-R-O-C(=O)-)- and is a polycarbonate resin in which a carbon atom directly attached to the carbonate bond is an aromatic carbon atom. In the formula, R is typically an aromatic hydrocarbon group or may be an aromatic hydrocarbon group incorporating a heteroatom or hetero-bond in order to impart various characteristics. A typical example of the aromatic polycarbonate resin (A) is an aromatic polycarbonate resin produced from a dihydroxyaryl compound, such as 2,2-bis(4-hydroxyphenyl)propane (bisphenol A).

Examples of the dihydroxydiaryl compound include, in addition to bisphenol A, bis(hydroxyaryl)alkanes, such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)diphenylmethane, 2,2-bis(4-hydroxy-3-methylphenyl)propane, 1,1-bis(4-hydroxy-3-tert-butylphenyl)propane, 2,2-bis(4-hydroxy-3-bromophenyl)propane, 2,2-bis(4-hydroxy-3,5-dibromophenyl)propane, and 2,2-bis(4-hydroxy-3,5-dichlorophenyl)propane; bis(hydroxyaryl)cycloalkanes, such as 1,1-bis(4-hydroxyphenyl)cyclopentane and 1,1-bis(4-hydroxyphenyl)cyclohexane; dihydroxydiaryl ethers, such as 4,4'-dihydroxydiphenyl ether and 4,4'-dihydroxy-3,3'-dimethyldiphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide; and dihydroxydiaryl sulfones, such as 4,4'-dihydroxydiphenyl sulfone and 4,4'-dihydroxy-3,3'-dimethyldiphenyl sulfone.

These are used alone or in combination as a mixture of two or more. In addition to those described above, for example, piperazine, dipiperidylhydroquinone, resorcin, and 4,4'-dihydroxydiphenyl may also be mixed and used.

The dihydroxydiaryl compound and a trihydric phenolic compound as described below may be mixed and used. Examples of the trihydric phenolic compound include phloroglucinol, 4,6-dimethyl-2,4,6-tri-(4-hydroxyphenyl)-heptene, 2,4,6-trimethyl-2,4,6-tri-(4-hydroxyphenyl)-heptane, 1,3,5-tri-(4-hydroxyphenyl)-benzol, 1,1,1-tri-(4-hydroxyphenyl)-ethane, and 2,2-bis-(4,4-di(4-hydroxyphenyl)cyclohexyl)-propane.

Although the viscosity-average molecular weight (Mv) of the aromatic polycarbonate resin (A) is not particularly limited, the aromatic polycarbonate resin (A) having a viscosity-average molecular weight (Mv) of 15,000 to 40,000 is preferably used. At a viscosity-average molecular weight (Mv) of less than 15,000, the impact resistance and the heat resistance tend to deteriorate. At a viscosity-average molecular weight (Mv) of more than 40,000, the flowability is low, and the formability tends to be unsatisfactory. The aromatic polycarbonate resin (A) more preferably has a viscosity-average molecular weight (Mv) of 16,000 to 35,000, even more preferably 18,000 to 30,000.

Accordingly, in the case of producing the aromatic polycarbonate resin (A), it is preferable to produce the aromatic polycarbonate resin (A) having such a viscosity-average molecular weight (Mv) using, for example, the dihydroxydiaryl compound and, if necessary, a molecular weight modifier, a catalyst, and so forth.

Here, the viscosity-average molecular weight [Mv] refers to a value determined by measuring the limiting viscosity [η] (unit: dl/g) with an Ubbelohde viscometer using methylene chloride serving as a solvent at a temperature of 20°C and calculating Mv from the Schnell's viscosity equation: $\eta = 1.23 \times 10^{-4} Mv^{0.83}$.

The limiting viscosity [η] refers to a value determined by measuring specific viscosities [$\eta_{sp}$] at solution concentrations [C] (g/dl) and calculating the limiting viscosity from the following equation.
[Math. 1]

Specific examples of the aromatic polycarbonate resin (A) include commercially available "Iupilon series" and "Novarex series" (from Mitsubishi Engineering-Plastics Corporation) and "Tarflon series" (from Idemitsu Kosan Co., Ltd).

As the aromatic polycarbonate resin (A), a single type of aromatic polycarbonate resin may be used. Alternatively, a mixture of two or more aromatic polycarbonate resins that differ in, for example, monomer compositions and physical properties may be used. For example, it is also possible to use a mixture prepared by mixing two or more aromatic

polycarbonate resins having different viscosity-average molecular weights in such a manner that the resulting mixture has the foregoing preferable viscosity-average molecular weight.

In the thermoplastic resin composition of the present invention, the aromatic polycarbonate resin (A) content is preferably 25 to 80 parts by mass based on 100 parts by mass in total of the aromatic polycarbonate resin (A), the graft copolymer (B), and the (meth)acrylate-based copolymer (C) from the viewpoints of the impact resistance, the heat resistance, and the color developability. The aromatic polycarbonate resin (A) content is more preferably 35 to 80 parts by mass, even more preferably 40 to 75 parts by mass. When the aromatic polycarbonate resin (A) content is equal to or higher than the lower limit, the impact resistance and the heat resistance are satisfactory. When the aromatic polycarbonate resin (A) content is equal to or lower than the upper limit, the color developability and the stiffness are satisfactory.

<Graft Copolymer (B)>

The graft copolymer (B) is prepared by graft-polymerizing at least one of the vinyl-based monomers (Y), such as a vinyl cyanide monomer, an aromatic vinyl-based monomer, a (meth)acrylate-based monomer, and a maleimide-based monomer, onto the rubbery polymer (X).

Examples of the rubbery polymer (X) incorporated in the graft copolymer (B) include butadiene-based rubbers, such as polybutadiene, styrene/butadiene copolymers, acrylate/butadiene copolymers; conjugated diene-based rubbers, such as styrene/isoprene copolymers; acrylic rubbers, such as poly(butyl acrylate); silicone/acrylic-based rubbers; and olefinic rubbers, such as ethylene/propylene copolymers. These rubbery polymers may be used alone or in combination of two or more. Among these, polybutadiene-based rubber, acrylic rubber, olefinic rubber, and silicone/acrylic-based composite rubber are preferred from the viewpoint of the impact resistance. The silicone/acrylic-based composite rubber is more preferred from the viewpoint of the color developability.

As the silicone/acrylic-based composite rubber, a silicone/acrylic-based composite rubber in which a polyorganosiloxane (a) and an alkyl (meth)acrylate-based polymer (b) are composited is preferred.

The silicone/acrylic-based composite rubber will be described below. The silicone/acrylic-based composite rubber can be produced, for example, by a method described in Japanese Unexamined Patent Application Publication No. 2016-125006.

<Polyorganosiloxane (a)>

The polyorganosiloxane (a) incorporated in the rubbery polymer (X) that is a silicone/acrylic-based rubber is preferably, but not particularly limited to, a polyorganosiloxane that contains a vinyl polymerizable functional group (vinyl polymerizable functional group-containing polyorganosiloxane), more preferably a polyorganosiloxane that contains vinyl polymerizable functional group-containing polyorganosiloxane units and dimethylsiloxane units.

The percentage of the vinyl polymerizable functional group-containing siloxane units in the polyorganosiloxane (a) is preferably 0.3 to 3 mol%. In the case where the percentage of the vinyl polymerizable functional group-containing siloxane units is within the above range, the polyorganosiloxane (a) and the alkyl (meth)acrylate-based polymer (b) are sufficiently composited, and the polyorganosiloxane (a) is less likely to bleed out from the surface of the resulting molded article. Thus, the molded article has better surface appearance and further improved impact resistance.

As the polyorganosiloxane (a), silicon atoms each having three or more siloxane bonds preferably account for 0 to 1 mol% of all silicon atoms in the polyorganosiloxane because the molded article has further improved surface appearance.

A preferred embodiment of the polyorganosiloxane (a) is a polyorganosiloxane composed of 0.3 to 3 mol% of the vinyl polymerizable functional group-containing siloxane units and 99.7 to 97 mol% of the dimethylsiloxane units (provided that the sum of the vinyl polymerizable functional group-containing siloxane units and the dimethylsiloxane units is 100 mol%), in which silicon atoms each having three or more siloxane bonds preferably account for 1 mol% or less of all silicon atoms in the polyorganosiloxane.

The average particle size of the polyorganosiloxane (a) is, but not particularly limited to, 400 nm or less, more preferably 150 nm or less because the molded article has further improved surface appearance. The lower limit of the average particle size of the polyorganosiloxane (a) is preferably 20 nm or more.

The average particle size of the polyorganosiloxane (a) is a value (mass-average particle size) determined by measuring the particle size distribution on a mass basis with a particle size distribution analyzer and calculating the average particle size from the resulting particle size distribution.

<Alkyl (Meth)Acrylate-Based Polymer (b)>

The (meth)acrylate-based polymer (b) incorporated in the rubbery polymer (X) that is a silicone/acrylic-based

composite rubber is obtained by polymerizing a monomeric component containing one or more alkyl (meth)acrylate monomers. The monomeric component may contain a monomer other than the alkyl (meth)acrylate monomer (another monomer).

Examples of the alkyl (meth)acrylate monomer include, but are not particularly limited to, alkyl acrylates, such as methyl acrylate, ethyl acrylate, n-propyl acrylate, n-butyl acrylate, and 2-ethylhexyl acrylate; and alkyl methacrylates, such as hexyl methacrylate, 2-ethylhexyl methacrylate, and n-lauryl methacrylate. These alkyl (meth)acrylate monomers may be used alone or in combination of two or more. Among these, n-butyl acrylate is preferred from the viewpoint of further improving the impact resistance of the resulting molded article.

The percentage of the alkyl (meth)acrylate is preferably 80% to 100% by mass, more preferably 90% to 100% by mass based on 100% by mass of the monomeric component.

The another monomer is not particularly limited as long as it is copolymerizable with the alkyl (meth)acrylate monomer. Examples thereof include aromatic vinyl-based monomers (such as styrene, α-methylstyrene, and p-methylstyrene), and vinyl cyanide-based monomers (such as acrylonitrile and methacrylonitrile). As the another monomer, these monomers may be used alone or in combination of two or more.

To introduce a cross-linked structure into the alkyl (meth)acrylate-based polymer (b) obtained from the alkyl (meth)acrylate monomer, the polymerization is preferably performed with a crosslinking agent added. The polymerized crosslinking agent contained in the composite rubber also functions as grafting sites for grafting the vinyl-based monomers (Y) when the graft copolymer (B) is produced.

Examples of the crosslinking agent include allyl (meth)acrylate, butylene di(meth)acrylate, ethylene glycol di(meth)acrylate, propylene glycol di(meth)acrylate, 1,3-butylene glycol di(meth)acrylate, 1,4-butylene glycol di(meth)acrylate, triallyl cyanurate, and triallyl isocyanurate. These may be used alone or in combination of two or more.

The amount of crosslinking agent used is not particularly limited. The crosslinking agent is preferably used in an amount of 0.1 to 5.0 parts by mass based on 100 parts by mass in total of the crosslinking agent and the alkyl (meth)acrylate monomer.

A method for producing the alkyl (meth)acrylate-based polymer (b) is not particularly limited. The alkyl (meth)acrylate-based polymer (b) can be produced by a known method.

<Composition of Silicone/Acrylic-Based Composite Rubber>

The percentages of the polyorganosiloxane (a) and the alkyl (meth)acrylate-based polymer (b) in the rubbery polymer (X) that is a silicone/acrylic-based composite rubber are not particularly limited. Preferably, 4% to 14% by mass of the polyorganosiloxane (a) and 96% to 86% by mass of the alkyl (meth)acrylate-based polymer (b) are contained, based on 100% by mass in total of the polyorganosiloxane (a) and the alkyl (meth)acrylate-based polymer (b) because the resulting molded article has further improved impact resistance and surface appearance.

<Volume-Average Particle Size>

The volume-average particle size of the rubbery polymer (X) that is a silicone/acrylic-based composite rubber is preferably, but not particularly limited to, 100 nm to 200 nm, particularly preferably 120 to 180 nm. At a volume-average particle size of 100 nm or more, the resulting molded article has satisfactory impact resistance and surface appearance. At a volume-average particle size of 200 nm or less, the resulting molded article has satisfactory surface appearance.

The volume-average particle size of the rubbery polymer (X) is a value determined by measuring the particle size distribution on a volume basis with a particle size distribution analyzer and calculating the volume-average particle size from the resulting particle size distribution.

The percentage of particles having a particle size of 300 to 500 nm is preferably 5% to 25% by volume based on all particles of the rubbery polymer (X). That is, the rubbery polymer (X) preferably has a particle size distribution in which particles having a particle size of 300 to 500 nm account for 5% to 25% by volume of all particles. When the percentage of the particles having a particle size of 300 to 500 nm is 5% or more by volume, the resulting molded article has excellent impact resistance. When the percentage of the particles having a particle size of 300 to 500 nm is 25% or less by volume, the resulting molded article has satisfactory surface smoothness. The percentage of the particles having a particle size of 300 to 500 nm is preferably 5% to 15% by volume because the resulting molded article has a better balance between impact resistance and surface appearance.

As the rubbery polymer (X), a single type of rubbery polymer may be used. Alternatively, two or more rubbery polymers may be used in combination.

Examples of the vinyl-based monomers (Y) incorporating the graft copolymer (B) include, but are not particularly limited to, aromatic vinyl-based monomers, alkyl (meth)acrylate-based monomers, vinyl cyanide-based monomers, and maleimide-based monomers.

Examples of aromatic vinyl-based monomers include styrene, α-methylstyrene, and p-methylstyrene.

Examples of alkyl (meth)acrylate-based monomers include methyl methacrylate, ethyl methacrylate, 2-ethylhexyl methacrylate, methyl acrylate, ethyl acrylate, n-butyl acrylate, isobutyl acrylate, and tert-butyl acrylate.

Examples of vinyl cyanide-based monomers include acrylonitrile and methacrylonitrile.

These may be used alone or in combination of two or more. An aromatic vinyl-based monomer, such as styrene, and a vinyl cyanide-based monomer, such as acrylonitrile, are preferably used in combination because the resulting molded article has further improved impact resistance.

The monomer composition ratio of the vinyl-based monomers (Y) to be graft-polymerized onto the rubbery polymer (X) is not particularly limited. In the case where the aromatic vinyl-based monomer and the vinyl cyanide-based monomer are used in combination, 60% to 95% by mass of the aromatic vinyl-based monomer and 5% to 40% by mass of the vinyl cyanide-based monomer are preferably used, based on 100% by mass in total of the aromatic vinyl-based monomer and the vinyl cyanide-based monomer in terms of effects on impact resistance, heat resistance, and stiffness.

The graft copolymer (B) is preferably prepared by graft-polymerizing 30 to 80 parts by mass of one or two or more vinyl-based monomers (Y) onto 20 to 70 parts by mass of the rubbery polymer (X), (provided that the total amount of the rubbery polymer (X) and the vinyl-based monomers (Y) is 100 parts by mass), from the points of view of the stiffness and achieving both the impact resistance and the flowability, for example. Regarding the proportions, preferably, the amount of the vinyl-based monomers (Y) is 32 to 78 parts by mass, and the amount of the rubbery polymer (X) is 22 to 68 parts by mass. More preferably, the amount of the vinyl-based monomers (Y) is 34 to 76 parts by mass, and the amount of the rubbery polymer (X) is 24 to 66 parts by mass, (provided that the total amount of the rubbery polymer (X) and the vinyl-based monomers (Y) is 100 parts by mass).

The graft copolymer (B) can be produced by graft-polymerizing the vinyl-based monomers (Y) in the presence of the rubbery polymer (X) in the usual manner.

A method for producing the graft copolymer (B) is not particularly limited. A widely known method, such as bulk polymerization, solution polymerization, bulk suspension polymerization, suspension polymerization, or emulsion polymerization, is employed.

To achieve a good balance between the impact resistance of the resulting molded article and the appearance characteristics of the resulting molded article, the degree of grafting, which is determined by a method described in examples below, of the graft copolymer (B) is preferably in the range of 20% to 80%. When the degree of grafting of the graft copolymer (B) is equal to or higher than the lower limit, the resulting molded article has satisfactory appearance characteristics. When the degree of grafting of the graft copolymer (B) is within the above range, the impact resistance is satisfactory.

The acetone-soluble component of the graft copolymer (B) preferably has a reduced viscosity of 0.1 to 1.5 dL/g, particularly preferably 0.15 to 1.45 dL/g. When the acetone-soluble component of the graft copolymer (B) has a reduced viscosity equal to or higher than the lower limit, improved impact resistance is obtained. At a reduced viscosity equal to or lower than the upper limit, satisfactory appearance of the resulting molded article and satisfactory formability can be maintained. The reduced viscosity of the acetone-soluble component of the graft copolymer (B) is determined by a method described in a section of Examples below.

The thermoplastic resin composition of the present invention preferably has a graft copolymer (B) content of 10 to 30 parts by mass based on 100 parts by mass in total of the aromatic polycarbonate resin (A), the graft copolymer (B), and the (meth)acrylate-based copolymer (C) from the viewpoints of the impact resistance and the heat resistance. The graft copolymer (B) content is more preferably 10 to 25 parts by mass, even more preferably 15 to 25 parts by mass. A graft copolymer (B) content equal to or higher than the lower limit results in satisfactory impact resistance. A graft copolymer (B) content equal to or lower than the upper limit results in satisfactory heat resistance and stiffness.

<(Meth)Acrylate-Based Copolymer (C)>

The (meth)acrylate-based copolymer (C) is obtained by polymerizing the vinyl-based monomer mixture (m1) containing a (meth)acrylate monomer using a known method. The vinyl-based monomer mixture (m1) contains the (meth)acrylate-based monomer as an essential component and, if necessary, another vinyl-based monomer. Examples of the another vinyl-based monomer include N-substituted maleimide-based monomers, aromatic vinyl-based monomers, and other monomers.

The (meth)acrylate-based monomer content of the vinyl-based monomer mixture (m1) is preferably, but not particularly limited to, 52% to 99% by mass, more preferably 60% to 95% by mass, even more preferably 65% to 92% by mass based on 100% by mass in total of the vinyl-based monomer mixture (m1) because of excellent color developability and so forth of the resulting (meth)acrylate-based copolymer (C), the thermoplastic resin composition, and the molded article thereof. When the (meth)acrylate-based monomer content is within the above range, the resulting (meth)acrylate-based copolymer (C), the thermoplastic resin composition, and the molded article thereof are excellent in color developability and impact resistance.

Examples of the (meth)acrylate-based monomer incorporated in the vinyl-based monomer mixture (m1) include,

but are not particularly limited to, methyl (meth)acrylate, ethyl (meth)acrylate, propyl (meth)methacrylate, butyl (meth)acrylate, cyclohexyl (meth)acrylate, cyclodecyl (meth)acrylate, phenyl (meth)acrylate, and 2,4,6-tribromophenyl (meth)acrylate. Among these, methyl methacrylate is most preferred. These (meth)acrylate-based monomers may be used in combination of two or more, as needed. When these (meth)acrylate-based monomers are used in combination, methyl methacrylate is preferably contained in an amount of 25% or more by mass, more preferably 50% or more by mass, based on the total amount of the (meth)acrylate-based monomers.

Examples of an N-substituted maleimide-based monomer serving as another vinyl-based monomer used for the vinyl-based monomer mixture (m1) include, but are not particularly limited to, N-substituted arylmaleimides, such as N-phenylmaleimide and N-o-chlorophenylmaleimide; N-substituted alkylmaleimides, such as N-methylmaleimide, N-ethylmaleimide, N-propylmaleimide, N-butylmaleimide, and N-tert-butylmaleimide; and N-substituted cycloalkylmaleimides, such as N-cyclohexylmaleimide. Among these, N-phenylmaleimide is preferred from the viewpoints of the heat resistance and the stiffness. These N-substituted maleimide-based monomers may be used in combination of two or more, as needed. When these N-substituted maleimide-based monomers are used in combination, N-phenylmaleimide is preferably contained in an amount of 25% or more by mass, more preferably 50% or more by mass, based on the total amount of the N-substituted maleimide-based monomers.

The N-substituted maleimide-based monomer content of the vinyl-based monomer mixture (m1) is, but not particularly limited to, 13% or less by mass, preferably 2% or more by mass and 13% or less by mass, more preferably 3% or more by mass and 13% or less by mass based on 100% by mass in total of the vinyl-based monomer mixture (m1) because of excellent heat resistance, color developability, and other properties of the resulting (meth)acrylate-based copolymer (C), the thermoplastic resin composition, and the molded article thereof. When the N-substituted maleimide content is 13% or less by mass, the resulting (meth)acrylate-based copolymer (C), the thermoplastic resin composition, and the molded article thereof have satisfactory color developability, flowability, and impact resistance. When the N-substituted maleimide content is within the above range, the resulting (meth)acrylate-based copolymer (C), the thermoplastic resin composition, and the molded article thereof are excellent in heat resistance and color developability.

Examples of an aromatic vinyl-based monomer serving as another vinyl-based monomer used for the vinyl-based monomer mixture (m1) include, but are not particularly limited to, styrene, α-methylstyrene, and vinyltoluene. Among these, styrene and α-methylstyrene are preferred. These aromatic vinyl-based monomers may be used in combination of two or more, as needed. When these aromatic vinyl-based monomers are used in combination, styrene and/or α-methyl styrene is preferably contained in an amount of 25% or more by mass, more preferably 50% or more by mass, based on the total amount of the aromatic vinyl-based monomers.

The aromatic vinyl-based monomer content of the vinyl-based monomer mixture (m1) is preferably, but not particularly limited to, 7% to 39% by mass, more preferably 8% to 30% by mass, even more preferably 9% to 25% by mass based on 100% by mass in total of the vinyl-based monomer mixture (m1) because of excellent color developability of the resulting (meth)acrylate-based copolymer (C), the thermoplastic resin composition, and the molded article thereof. When the aromatic vinyl-based monomer content is 7% or more by mass, the resulting (meth)acrylate-based copolymer (C), the thermoplastic resin composition, and the molded article thereof have satisfactory flowability. An aromatic vinyl-based monomer content of 39% or less by mass results in satisfactory color developability and impact resistance.

The vinyl-based monomer mixture (m1) may contain, in addition to the (meth)acrylate-based monomer and the foregoing vinyl-based monomers, another vinyl-based monomer copolymerizable therewith, as needed. Examples of the another copolymerizable vinyl-based monomer include conjugated dienes, such as butadiene and isoprene; vinyl cyanide-based monomer, such as acrylonitrile; and unsaturated carboxylic acids, such as acrylic acid, maleic acid, and maleic anhydride. These may be used alone or in combination of two or more.

The another monomer may be added in accordance with the characteristics of the (meth)acrylate-based copolymer (C). The another vinyl-based monomer is preferably contained in an amount of 35% or less by mass, particularly preferably 30% or less by mass, based on 100% by mass of the vinyl-based monomer mixture (m1) from the viewpoint of easily maintaining the basic properties, such as heat resistance, color developability, and high mechanical properties, of the (meth)acrylate-based copolymer (C).

The mass-average molecular weight (Mw) of the (meth)acrylate-based copolymer (C) is preferably, but not particularly limited to, in the range of 10,000 to 300,000, particularly preferably 50,000 to 200,000. When the mass-average molecular weight of the (meth)acrylate-based copolymer (C) is within the above range, the resulting (meth)acrylate-based copolymer (C) and the thermoplastic resin composition are excellent in flowability, scratch resistance, and impact resistance.

The mass-average molecular weight of the (meth)acrylate-based copolymer (C) is determined by subjecting a solution thereof in tetrahydrofuran (THF) to gel permeation chromatography (GPC) and calculating the resulting value in terms of standard polystyrene (PS).

The (meth)acrylate-based copolymer (C) preferably has a glass transition temperature (Tg) of 100°C to 140°C, particularly preferably 105°C to 135°C in view of the heat resistance.

In the thermoplastic resin composition of the present invention, the (meth)acrylate-based copolymer (C) content is preferably 10 to 45 parts by mass based on 100 parts by mass in total of the aromatic polycarbonate resin (A), the graft copolymer (B), and the (meth)acrylate-based copolymer (C) in view of the impact resistance, the heat resistance and the stiffness. The (meth)acrylate-based copolymer (C) content is more preferably 10 to 40 parts by mass, even more preferably 10 to 35 parts by mass. When the (meth)acrylate-based copolymer (C) content is equal to or higher than the lower limit, the impact resistance, the heat resistance, and the stiffness are satisfactory. When the (meth)acrylate-based copolymer (C) content is equal to or lower than the upper limit, the impact resistance is satisfactory.

<NO-Alkyl-Type Hindered Amine-Based Light Stabilizer (D)>

The NO-alkyl-type hindered amine-based light stabilizer is a compound in which the hydrogen atom attached to the nitrogen atom of a 2,2,6,6-tetramethylpiperidine skeleton is replaced with an alkoxy group.

The NO-alkyl-type hindered amine-based light stabilizer (D) may be a monocyclic type having one 2,2,6,6-tetramethylpiperidine ring or a bicyclic type in which two 2,2,6,6-tetramethylpiperidine rings are linked by an ester bond formed using a dicarboxylic acid, such as sebacic acid, or carbonic acid. From the viewpoints of the effects of improving the hydrolysis resistance, the weather resistance, and the impact resistance, the bicyclic type is preferred.

The number of carbon atoms in the alkoxy group attached to the nitrogen atom of the 2,2,6,6-tetramethylpiperidine skeleton is preferably 5 to 15, more preferably 6 to 14, even more preferably 7 to 13 from the viewpoints of the effects of improving the hydrolysis resistance, the weather resistance, and the impact resistance.

The molecular weight of the NO-alkyl-type hindered amine-based light stabilizer (D) is preferably in the range of 500 to 1,000 in view of the impact resistance. The NO-alkyl-type hindered amine-based light stabilizer (D) more preferably has a molecular weight of 550 to 950, even more preferably 600 to 900.

As the NO-alkyl-type hindered amine-based light stabilizer (D), a corresponding commercial product can be used. Examples of the commercially available NO-alkyl-type hindered amine-based light stabilizer (D) include "ADK STAB LA-81", available from Adeka Corporation, and "Tinuvin PA123", available from BASF, which are represented by structural formulae below.

[Chem. 1]

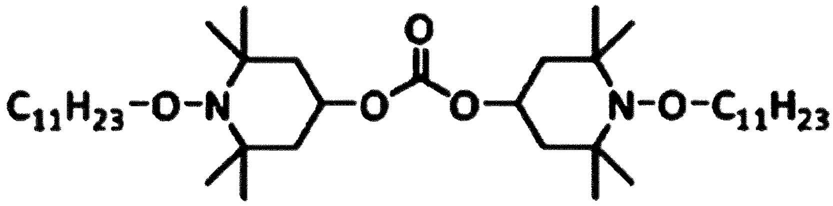

ADK STAB LA-81

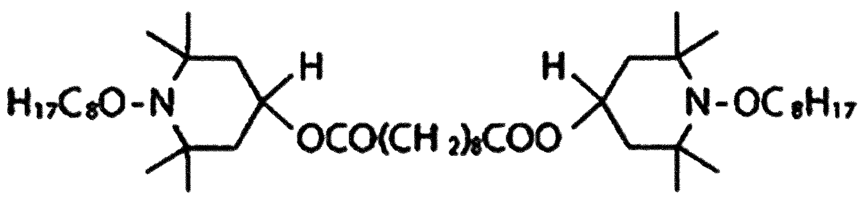

Tinuvin PA123

As the NO-alkyl-type hindered amine-based light stabilizer (D), a single type may be used alone. Alternatively, a mixture of two or more types may be used.

In the case where the thermoplastic resin composition of the present invention contains the NO-alkyl-type hindered amine-based light stabilizer (D), the NO-alkyl-type hindered amine-based light stabilizer (D) in the thermoplastic resin composition of the present invention is preferably contained in an amount of 0.1 to 0.8 parts by mass, more preferably 0.2 to 0.7 parts by mass based on 100 parts by mass in total of the aromatic polycarbonate resin (A), the graft copolymer (B), and the (meth)acrylate-based copolymer (C). When the NO-alkyl-type hindered amine-based light stabilizer (D) content is equal to or higher than the lower limit, excellent hydrolysis resistance and weather resistance are obtained, and the impact resistance tends to be enhanced. When the NO-alkyl-type hindered amine-based light stabilizer (D) content is equal to or lower than the upper limit, the durability tends to be satisfactory.

<Another Thermoplastic Resin>

The thermoplastic resin composition of the present invention may contain another thermoplastic resin in addition to the aromatic polycarbonate resin (A), the graft copolymer (B), and the (meth)acrylate-based copolymer (C), as needed. Examples of the another thermoplastic resin include, but are not particularly limited to, AS resins, poly(butylene terephthalate) (PBT resins), poly(ethylene terephthalate (PET resins), poly(vinyl chloride), polystyrene, polyacetal resins, modified poly(phenylene ether) (modified PPE resins), ethylene-vinyl acetate copolymers, polyarylate, liquid crystal polyester resins, polyethylene resins, polypropylene resins, fluorocarbon resins, and polyamide resins (nylons). These may be used alone or in combination of two or more.

In the case where the thermoplastic resin composition of the present invention contains the another thermoplastic resin, the another thermoplastic resin is preferably contained in an amount of 40% or less by mass, particularly preferably 30% or less by mass, based on 100% by mass of all thermoplastic resin components in the thermoplastic resin composition from the viewpoint of more effectively providing the effects of the impact resistance, the heat resistance, the stiffness, and the color developability.

<Additive>

The thermoplastic resin composition of the present invention may be blended with other common additives during the production (mixing) and forming of the thermoplastic resin composition as long as the physical properties of the thermoplastic resin composition and the molded article thereof are not impaired. Examples of the additives that can be added include skid agents, pigments, dyes, fillers (such as carbon black, silica, and titanium oxide), heat-resistant agents (heat stabilizers), antioxidants, weathering stabilizers other than the NO-alkyl-type hindered amine-based light stabilizer (D) (such as ultraviolet absorbers and light stabilizers), release agents, plasticizers, antistatic agents, flame retardants, flame retardant aids, curing agents, curing accelerator, conductivity-imparting agents, stress-relieving agents, crystallization promoting agents, anti-hydrolysis agents, lubricants, impact resistance imparting agents, slidability-improving agents, compatibilizers, nucleating agents, impact modifiers, flowability-adjusting agents, sensitizers, thickeners, anti-settling agents, dripping-preventing agents, antifoaming agents, coupling agents, light-diffusing fine particles, preservatives, antimicrobial agents, fungicides, stain-proofing agents, and conductive polymers.

<Method for Producing Thermoplastic Resin Composition>

The thermoplastic resin composition of the present invention can be produced by a known method with a known apparatus. An example of a usual method is a melt-mixing method. Examples of an apparatus used in this method include extruders, Banbury mixers, rollers, and kneaders. Any of batch and continuous processes may be used for mixing. For example, the order of mixing the components is not particularly limited as long as all components are uniformly mixed.

[Molded Article]

The molded article of the present invention is obtained by forming the thermoplastic resin composition of the present invention. Examples of a formation method include injection molding methods, injection compression molding methods, extrusion methods, blow molding methods, vacuum molding methods, air-pressure forming methods, calender molding methods, and inflation molding methods. Among these, injection molding methods and injection compression molding methods are preferred because molded articles with high dimensional accuracy can be produced with excellent mass productivity.

[Application]

The thermoplastic resin composition containing the aromatic polycarbonate resin (A), the graft copolymer (B), and the (meth)acrylate-based copolymer (C) according to the present invention and the molded article thereof are excellent in flowability and also excellent in color developability (coloration properties), heat resistance, impact resistance, and stiffness. Thus, these are suitably used in a wide range of fields, such as vehicle interior and exterior components, office equipment, home appliances, and building materials.

The thermoplastic resin composition further containing the NO-alkyl-type hindered amine-based light stabilizer (D) according to the present invention and the molded article thereof are excellent in flowability and also excellent in color developability (coloration properties), impact resistance, durability, and weather resistance. Thus, these are suitably used in a wide range of fields, such as vehicle interior and exterior components, office equipment, home appliances, and building materials.

EXAMPLES

While the present invention will be described below by taking specific examples and comparative examples, the present invention is not limited to these examples below.

The symbol "%" refers to "% by mass", and the term "parts" refers to "parts by mass".

[Measurement and Evaluation Method]

Various measurement and evaluation methods in the following examples, comparative examples, and reference examples are described below.

<Volume-Average Particle Size of Rubbery polymer (X)>

The volume-average particle size of the rubbery polymer (X) dispersed in an aqueous dispersion was measured with a Microtrac ("Nanotrac 150", available from Nikkiso Co., Ltd.) using ion-exchanged water as a measurement solvent.

<Degree of Grafting of Graft Copolymer (B)>

First, 1 g of the graft copolymer (B) was added to 80 mL of acetone. The mixture was heated to reflux at 65°C to 70°C for 3 hours. The resulting suspended acetone solution was fractionated by centrifugation with a centrifuge ("CR21E", available from Hitachi Koki Co. Ltd.,) at 14,000 rpm for 30 minutes into a precipitated component (acetone-insoluble component) and an acetone solution (acetone-soluble component).

The precipitated component (acetone-insoluble component) was dried. The mass (W1 (g)) thereof was measured. The degree of grafting was calculated from formula (1) below.

In formula (1), W1 is the mass (g) of the acetone-insoluble component of the graft copolymer (B), W2 is the total mass (g) of the graft copolymer (B) used in determining W1, and each rubber fraction is the solid-content concentration of an aqueous dispersion of the rubbery polymer (X) used in the production of the graft copolymer (B).

$$\text{Degree of grafting (\% by mass)} = \{(W1 - W2 \times \text{rubber fraction})/W2 \times \text{rubber fraction}\} \times 100 \quad (1)$$

<Reduced Viscosity of Acetone-Soluble Component of Graft Copolymer (B)>

A solution of the graft copolymer (B) in N,N-dimethylformamide was prepared so as to have an acetone-soluble concentration of 0.2 dL/g. The reduced viscosity $\eta_{sp}/C$ (unit: dL/g) of the solution was measured with an Ubbelohde viscometer at 25°C.

<Molecular Weight of (Meth)Acrylate-Based Copolymer (C) and Vinyl Copolymer (d)>

The mass-average molecular weight of the (meth)acrylate-based copolymer (C) and a vinyl copolymer (d) were determined by subjecting solutions thereof in tetrahydrofuran (THF) to gel permeation chromatography (GPC) and calculating the resulting value in terms of standard polystyrene (PS).

<Glass Transition Temperature (Tg) of (Meth)Acrylate-Based Copolymer (C)>

The glass transition temperature (Tg) of the (meth)acrylate-based copolymer (C) was determined by differential scanning calorimetry (DSC). Specifically, the glass transition temperature observed when the temperature of the (meth)acrylate-based copolymer (C) was increased from 35°C to 250°C at 10 °C/min in a nitrogen atmosphere, decreased to 35°C, and increased again to 250°C was determined.

[Aromatic Polycarbonate Resin (A)]

As the aromatic polycarbonate resin (A), "Iupilon S-2000F" (viscosity-average molecular weight (Mv): 22,000), available from Mitsubishi Engineering-Plastics Corporation, was used.

[Graft Copolymer (B)]

As the graft copolymer (B), a graft copolymer (B-1) produced by a method described below was used.

<Production of graft copolymer (B-1)>

The graft copolymer (B-1) that was obtained by graft-polymerizing the vinyl-based monomers (Y) onto the rubbery polymer (X) that was a composite rubber of a polyorganosiloxane rubber and an alkyl (meth)acrylate-based polymer was obtained by a method described below.

<Production of Silicone/Acrylic-Based Composite Rubber (Rubbery polymer (X))>

First, 98 parts of octamethylcyclotetrasiloxane and 2 parts of γ-methacryloyloxypropyldimethoxymethylsilane were mixed to prepare 100 parts of a siloxane mixture. A solution of 0.67 parts of sodium dodecylbenzenesulfonate in 300 parts of ion-exchanged water was added thereto. The resulting mixture was stirred with a homomixer at 10,000 rpm for 2 minutes and then passed twice through a homogenizer at a pressure of 300 $kg/cm^2$ to prepare a stable premixed organosiloxane latex.

Separately, 10 parts of dodecylbenzenesulfonic acid and 90 parts of ion-exchanged water were charged into a reactor equipped with a reagent injection container, a condenser, a jacket heater, and a stirrer to prepare a 10% aqueous solution of dodecylbenzenesulfonic acid (an aqueous solution of an acid catalyst).

The premixed organosiloxane latex was added dropwise to the aqueous solution of the acid catalyst over a period of 2 hours while the aqueous solution of the acid catalyst was heated to 85°C. After completion of the dropwise addition, the mixture was maintained at the temperature for 3 hours and then cooled to a temperature equal to or lower than 40°C. The resulting reaction product was neutralized to pH 7.0 with a 10% aqueous solution of sodium hydroxide to prepare a latex of the polyorganosiloxane (a). The latex of the polyorganosiloxane (a) was dried at 180°C for 30 minutes, and the resulting solid content was found to be 18.2%. The average particle size on a mass basis was 30 nm.

Into a reactor equipped with a reagent injection container, a condenser, a jacket heater, and a stirrer, 200 parts of ion-exchanged water, 2 parts of potassium oleate, 4 parts of dioctyl sodium sulfosuccinate, 0.003 parts of iron(II) sulfate heptahydrate, 0.009 parts of disodium ethylenediaminetetraacetate, and 0.3 parts of sodium formaldehyde sulfoxylate were charged under a stream of nitrogen. The temperature was increased to 60°C. From the time when the temperature reached 60°C, a mixture of 85 parts of n-butyl acrylate, 15 parts of methacrylic acid, and 0.5 parts of cumene hydroperoxide was continuously added dropwise over a period of 120 minutes. After completion of the dropwise addition, aging was performed for another 2 hours while the temperature was maintained at 60°C, thereby preparing an acid group-containing copolymer latex having a solid content of 33%, a polymerization conversion of 96%, and a volume-average particle size of an acid group-containing copolymer of 120 nm.

Into a reactor equipped with a reagent injection container, a condenser, a jacket heater, and a stirrer, 5.0 parts of the latex of the polyorganosiloxane (a) in terms of solid content, 0.48 parts of dipotassium alkenylsuccinate, and 190 parts of ion-exchanged water were charged, and the mixture was mixed. A mixture, as monomers incorporated in the alkyl (meth)acrylate-based polymer (b), of 45.0 parts of n-butyl acrylate, 0.4 parts of allyl methacrylate, 0.09 parts of 1,3-butylene glycol dimethacrylate, and 0.12 parts of tert-butyl hydroperoxide was added thereto. A stream of nitrogen was passed through the reactor to replace the atmosphere with nitrogen. The internal temperature was increased to 60°C. When the internal temperature reached 60°C, an aqueous solution consisting of 0.000075 parts of iron(II) sulfate heptahydrate, 0.00023 parts of disodium ethylenediaminetetraacetate, 0.2 parts of sodium formaldehyde sulfoxylate, and 10 parts of ion-exchanged water was added thereto to initiate radical polymerization. Heat generation due to the polymerization was confirmed, and then the jacket temperature was set to 75°C. The polymerization was continued until the heat generation due to the polymerization was not observed. This state was maintained for another 1 hour, thereby preparing a composite rubber in which a polyorganosiloxane and a poly(butyl acrylate) rubber were composited (radical polymerization step). The resulting composite rubber had a volume-average particle size of 90 nm.

The temperature of the liquid in the reactor was decreased to 70°C, and then a 5% aqueous solution of sodium pyrophosphate was added in an amount of 0.20 parts in terms of solid content. The internal temperature was controlled at 70°C, and then the acid group-containing copolymer latex was added thereto in an amount of 0.30 parts in terms of solid content. The mixture was stirred for 30 minutes for enlargement, thereby preparing a latex of the rubbery polymer (X) (enlargement step).

The resulting rubbery polymer (X) in latex form had a volume-average particle size of 159 nm. The percentage of particles having a particle size of 300 to 500 nm in all particles of the rubbery polymer (X) was 10% by volume.

<Production of Graft Copolymer (B-1)>

An aqueous solution consisting of 0.001 parts of iron(II) sulfate heptahydrate, 0.003 parts of disodium ethylenediaminetetraacetate, 0.3 parts of Rongalite, and 10 parts of ion-exchanged water was added to the latex of the rubbery polymer (X). A liquid mixture of 10 parts of acrylonitrile, 30 parts of styrene, and 0.18 parts of tert-butyl hydroperoxide was added dropwise thereto over a period of 80 minutes, and polymerization was performed. After completion of the dropwise addition, the temperature was maintained at 75°C for 30 minutes. A mixture of 2.5 parts of acrylonitrile, 7.5 parts of styrene, 0.05 parts of tert-butyl hydroperoxide, and 0.02 parts of n-octyl mercaptan was added dropwise thereto over a period of 20 minutes, and polymerization was performed. After completion of dropwise addition, the temperature was maintained at 75°C for 30 minutes. Cumene hydroperoxide was added thereto in an amount of 0.05 parts. The temperature was maintained at 75°C for another 30 minutes. The mixture was then cooled to provide a latex of silicone/acrylic composite rubber-based graft copolymer (B-1) obtained by graft-polymerizing acrylonitrile and styrene onto the rubbery polymer (X). Next, 150 parts of a 1% aqueous solution of calcium acetate was heated to 60°C, and then 100 parts of the latex of the graft copolymer was slowly added dropwise thereto to obtain a precipitate. The precipitate was separated, dehydrated, washed, and dried to give the graft copolymer (B-1).

The acetone-soluble component of the graft copolymer (B-1) was contained in an amount of 26%, and the degree of grafting was 45%. The acetone-soluble component had a reduced viscosity of 0.60 dL/g.

[(Meth)Acrylate-Based Copolymer (C)]

As the (meth)acrylate-based copolymer (C), (meth)acrylate-based copolymers (C-1), (C-3), and (C-4) produced by methods described below and commercial products (C-2) and (C-5) described below were used.

<Production of (Meth)Acrylate-Based Copolymer (C-1)>

First, 0.1 parts of Perbutyl PV (available from NOF Corporation), 0.05 parts of Perbutyl O (available from NOF Corporation), 0.05 parts of Perhexa HC (available from NOF Corporation), 0.6 parts of tert-dodecyl mercaptan, and 0.2 parts of $\alpha$-methylstyrene dimer were mixed with 100 parts of a vinyl-based monomer mixture of 76 parts of methyl methacrylate (MMA), 8 parts of N-phenylmaleimide (N-PMI), and 16 parts of styrene (ST) in advance. To the resulting mixture, 200 parts of deionized water containing 0.5 parts of tribasic calcium phosphate and 0.003 parts of potassium alkenylsuccinate was added. The mixture was charged into a 20-L pressure-tight reaction tank equipped with a stirrer. Polymerization was initiated from 40°C. The reaction was performed for 9 hours at a rate of temperature increase of 5 to 10 °C/h during the polymerization reaction. After completion of the polymerization at 120°C, the mixture was subjected to cooling, washing, filtration, and drying steps to provide the (meth)acrylate-based copolymer (C-1) in a polymeric bead-like form.

The mass composition ratio, the mass-average molecular weight (Mw), and the glass transition temperature (Tg) of the (meth)acrylate-based copolymer (C-1) were measured and found to be the following.

Mass composition ratio: MMA/N-PMI/ST = 76/8/16
Mass-average molecular weight (Mw): 90,500
Glass transition temperature (Tg): 120°C

<(Meth)Acrylate-Based Copolymer (C-2)>

"Acrypet VH5", available from Mitsubishi Chemical Corporation, having a methyl methacrylate (MMA)/methyl acrylate (MA) ratio described below was used.

Mass composition ratio: MMA/MA = 98/2
Mass-average molecular weight (Mw): 72,000
Glass transition temperature (Tg): 114°C

<Production of (Meth)Acrylate-Based Copolymer (C-3)>

A copolymer was synthesized by a suspension polymerization method as described below.

In a nitrogen-purged reactor, 120 parts of water, 0.002 parts of a sodium alkylbenzenesulfonate, 0.5 parts of poly(vinyl alcohol), 0.3 parts of azoisobutyronitrile, 0.5 parts of tert-DM, and a monomer mixture of 24 parts of acrylonitrile (AN), 30 parts of styrene (ST), and 46 parts of methyl methacrylate (MMA) were used. The temperature was increased from a starting temperature of 60°C for 5 hours while portions of styrene were sequentially added to the resulting mixture,

and reached 120°C. The reaction was performed at 120°C for another 4 hours. The resulting polymeric substance was taken out to obtain the (meth)acrylate-based copolymer (C-3).

The mass composition ratio and the mass-average molecular weight (Mw) of the resulting (meth)acrylate-based copolymer (C-3) were measured and found to be the following.

Mass composition ratio: AN/ST/MMA = 24/30/46
Mass-average molecular weight (Mw): 98,000
Glass transition temperature (Tg): 98°C

<Production of (Meth)Acrylate-Based Copolymer (C-4)>

A copolymer was synthesized by a suspension polymerization method as described below.

In a nitrogen-purged reactor, a monomer mixture of 120 parts of water, 0.002 parts of a sodium alkylbenzenesulfonate, 0.5 parts of poly(vinyl alcohol), 0.3 parts of azoisobutyronitrile, 0.5 parts of tert-dodecyl mercaptan, 11 parts of acrylonitrile (AN), 5 parts of styrene (ST), 69 parts of methyl methacrylate (MMA), and 15 parts of $\alpha$-methylstyrene ($\alpha$-MST) was used. The temperature was increased from a starting temperature of 60°C for 5 hours while portions of styrene were sequentially added to the resulting mixture, and reached 120°C. The reaction was performed at 120°C for another 4 hours. The resulting polymeric substance was taken out to obtain the (meth)acrylate-based copolymer (C-4).

The mass composition ratio and the mass-average molecular weight (Mw) of the resulting (meth)acrylate-based copolymer (C-4) were measured and found to be the following.

Mass composition ratio: AN/ST/MMA/$\alpha$-MST = 11/5/69/15
Mass-average molecular weight (Mw): 100,000
Glass transition temperature (Tg): 113°C

<Meth)Acrylate-Based Copolymer (C-5)>

"Polyimilex PML203", available from Nippon Shokubai Co., Ltd., having a methyl methacrylate (MMA)/N-phenylmaleimide (N-PMI)/cyclohexylmaleimide (CHMI)/styrene (ST) ratio described below was used.

Mass composition ratio: MMA/N-PMI/CHMI/ST = 82/6/6/6
Mass-average molecular weight (Mw): 121,000
Glass transition temperature (Tg): 104°C

[Vinyl Copolymer (e)]

A vinyl copolymer (e) used in comparative examples below was produced by a suspension polymerization method as described below.

<Production of Vinyl Copolymer (e-1)>

In a nitrogen-purged reactor, 120 parts of water, 0.002 parts of a sodium alkylbenzenesulfonate, 0.5 parts of poly(vinyl alcohol), 0.3 parts of azoisobutyronitrile, 0.5 parts of tert-dodecyl mercaptan, and a monomer mixture of 26 parts of acrylonitrile (AN) and 74 parts of styrene (ST) were used. The temperature was increased from a starting temperature of 60°C for 5 hours while portions of styrene were sequentially added to the resulting mixture, and reached 120°C. The reaction was performed at 120°C for another 4 hours. The resulting polymeric substance was taken out to obtain the vinyl copolymer (e-1) having an AN/ST ratio of 26/74 (mass ratio) and a mass-average molecular weight (Mw) of 110,000.

[NO-Alkyl-Type Hindered Amine-Based Light Stabilizer (D)]

<NO-Alkyl-Type Hindered Amine-Based Light Stabilizer (D-1)>

STAB LA-81, available from Adeka Corporation, molecular weight: 681

<NO-Alkyl-Type Hindered Amine-Based Light Stabilizer (D-2)>

Tinuvin PA123, available from BASF, molecular weight: 737

[Other Hindered Amine-Based Light Stabilizer (d)]

<N-$CH_3$-Type Hindered Amine-Based Light Stabilizer (d-1)>

ADK STAB LA-52, available from Adeka Corporation, molecular weight: 847

<N-H-Type Hindered Amine-Based Light Stabilizer (d-2)>

ADK STAB LA-57, available from Adeka Corporation, molecular weight: 791

The structures of other hindered amine-based light stabilizers (d) are described below.

[Chem. 2]

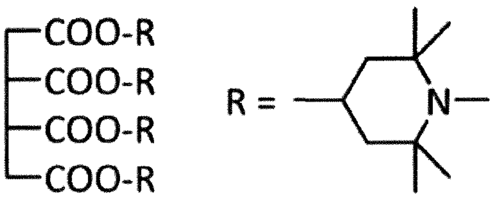

ADK STAB LA-52

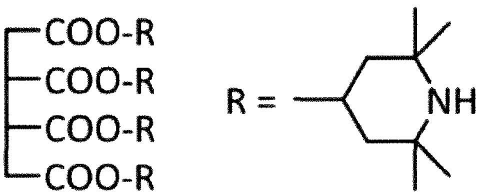

ADK STAB LA-57

[Injection Molding Method]

Molded articles used for evaluation were formed as described below.

<Injection Molding 1>

Pellets composed of a thermoplastic resin composition were molded with an injection molding machine ("IS55FP-1.5A", available from Toshiba Machine Co., Ltd.) at a cylinder temperature of 200°C to 270°C and a mold temperature of 60°C into molded articles each having a length of 63.5 mm, a width of 12.7 mm, and a thickness of 6.2 mm. The molded articles were used as molded articles (notched) for an Izod impact test, molded articles for measuring flexural moduli, and molded articles for measuring deflection temperatures under load.

<Injection Molding 2>

Pellets composed of a thermoplastic resin composition were molded with an injection molding machine ("IS55FP-1.5A", available from Toshiba Machine Co., Ltd.) at a cylinder temperature of 200°C to 270°C and a mold temperature of 60°C into molded articles each having a length of 100 mm, a width of 100 mm, and a thickness of 3 mm. The molded articles were used as molded articles for evaluation of color developability and molded articles for evaluation of weather resistance.

[Evaluation Method]

Evaluation methods are described below.

<Evaluation of Impact Resistance: Izod Impact Test>

The molded articles produced in Injection molding 1 were subjected to an Izod impact test (notched) according to the standard ASTM D 256 at 23°C or both at 23°C and -30°C to measure the Izod impact strength. A higher Izod

impact value indicates better impact resistance.

<Evaluation of Stiffness: Flexural Test>

The flexural modulus of each of the molded articles produced in Injection molding 1 was measured according to the standard ASTM D 790. A higher flexural modulus indicates better stiffness.

<Evaluation of Heat Resistance: Measurement of Deflection Temperature Under Load>

The deflection temperature under load (HDT) (°C) of each of the molded article produced in Injection molding 1 was measured according to the standard ASTM D 648 by an edgewise method and evaluated according to the following evaluation criteria.

(Evaluation Criteria)

HDT is 105°C or higher: O excellent for practical use
HDT is lower than 105°C and 103°C or higher: Δ adequate for practical use
HDT is lower than 103°C: × poor for practical use

<Evaluation of Color Developability: Measurement of Lightness L*>

The lightness L* of the molded articles produced in Injection molding 2 were measured with a spectrocolorimeter ("CM-3500d", available from Konica Minolta Optics, Inc.) in an SCE mode. A lower L* value indicates a blacker color, which is excellent in color developability.

<Evaluation of Durability: High-Temperature and High-Humidity Test>

The molded articles produced in Injection molding 1 were exposed to a high-temperature and high-humidity environment with a temperature of 85°C and a humidity of 85% for 200 hours. Then the Izod impact test (notched) was performed in the same manner as above to measure the Izod impact strength. The retention (%) of the Izod impact strength before and after exposure to the constant-temperature and high-humidity environment was calculated. Evaluation criteria are described below.

(Evaluation Criteria)

The retention of the Izod impact strength is 50% or more: excellent in durability
The retention of the Izod impact strength is 40% and less than 50%: adequate durability for practical use
The retention of the Izod impact strength is less than 40%: poor in durability

<Evaluation of Weather Resistance: Measurement of ΔE* Before and After Accelerated Test>

An accelerated test was performed for 200 hours with EYE Super UV Tester (Model: SUV-W151, available from Iwasaki Electric Co., Ltd.) under the following conditions: black panel temperature: 63°C, and cycle: 360 minutes (irradiation at an illuminance of 100 $mW/cm^2$ for 240 minutes (humidity: 50%) → shower: 10 seconds → blackness: 120 minutes (humidity: 95%). The color difference ΔE* before and after the accelerated test was measured with a spectrocolorimeter ("CM-3500d", available from Konica Minolta Optics, Inc.) in an SCE mode. A smaller ΔE* indicates better weather resistance.

[Examples I-1 to 11 and Comparative Example 1-1 and 2]

Components were mixed according to formulations (parts by mass) presented in Table 1. Furthermore, 0.8 parts of carbon black was mixed thereto. The resulting mixtures were melt-kneaded at 240°C with a twin-screw extruder having a vacuum vent having a diameter of 32 mm (TEX-30α, available from Japan Steel Works, Ltd.) to produce pellets of the thermoplastic resin compositions. Molded articles produced by subjecting the pellets of the thermoplastic resin

compositions to injection molding were evaluated by the above methods. Table 1 presents the results.

[Table 1]

| | | | | | | Example | | | | | | | | | | | Comparative example | |
|---|---|---|---|---|---|---|---|---|---|---|---|---|---|---|---|---|---|---|
| | | | | | | I-1 | I-2 | I-3 | I-4 | I-5 | I-6 | I-7 | I-8 | I-9 | I-10 | I-11 | I-1 | I-2 |
| Formulation | Aromatic polycarbonate resin (A) | | | | parts by mass | 50 | 40 | 80 | 40 | 40 | 60 | 60 | 50 | 50 | 50 | 50 | 80 | 50 |
| | Graft copolymer (B) | | | B-1 | parts by mass | 20 | 20 | 10 | 30 | 15 | 10 | 30 | 20 | 20 | 20 | 20 | 20 | 20 |
| | (Meth)acrylate-based copolymer (C) | | | C-1 | parts by mass | 30 | 40 | 10 | 30 | 45 | 30 | 10 | | | | | | |
| | | | | C-2 | parts by mass | | | | | | | | 30 | | | | | |
| | | | | C-3 | parts by mass | | | | | | | | | 30 | | | | |
| | | | | C-4 | parts by mass | | | | | | | | | | 30 | | | |
| | | | | C-5 | parts by mass | | | | | | | | | | | 30 | | |
| | Vinyl copolymer (e) | | | e-1 | parts by mass | | | | | | | | | | | | | 30 |
| Evaluation result | Impact resistance | Izod impact value | Normal temperature (23°C) | ASTM D 256 | J/m | 600 | 550 | 700 | 600 | 400 | 550 | 700 | 430 | 465 | 420 | 460 | 700 | 650 |
| | | | Low temperature (-30°C) | | | 55 | 50 | 120 | 55 | 40 | 50 | 100 | 35 | 25 | 30 | 30 | 120 | 60 |
| | Stiffness | Flexural modulus | | ASTM D 790 | MPa | 2450 | 2500 | 2400 | 2400 | 2400 | 2400 | 2300 | 2350 | 2350 | 2300 | 2300 | 2100 | 2150 |
| | Heat resistance | Deflection temperature under load | | ASTM D 648 | °C | ○ | ○ | ○ | ○ | ○ | ○ | ○ | Δ | Δ | Δ | ○ | ○ | × |
| | Color developability | L* | | SCE mode | L* | 6 | 6 | 7 | 6 | 5 | 6 | 7 | 6 | 8 | 7 | 6 | 9 | 9 |

As presented in Examples I-1 to 11, the molded articles obtained from the thermoplastic resin compositions each containing the aromatic polycarbonate resin (A), the graft copolymer (B), and the (meth)acrylate-based copolymer (C) according to the present invention are excellent in all of the color developability, impact resistance, stiffness, and heat resistance.

In contrast, Comparative example I-1 reveals the results of a typical PC/ABS resin containing no (meth)acrylate-based copolymer (C). Although the impact resistance and the heat resistance are satisfactory, the color developability is poor.

Comparative example 1-2 reveals the results when the copolymer different from the (meth)acrylate-based copolymer (C) was used. Although the impact resistance is satisfactory, the stiffness, the heat resistance, and the color developability are poor.

[Examples II-1 to 14, Comparative Examples II-1 and 2, and Reference Example II-1]

Components were mixed according to formulations (parts by mass) presented in Tables 2A and 2B. Furthermore, 0.8 parts of carbon black was mixed thereto. The resulting mixtures were melt-kneaded at 240°C with a twin-screw extruder having a vacuum vent having a diameter of 32 mm (TEX-30α, available from Japan Steel Works, Ltd.) to produce pellets of the thermoplastic resin compositions. Molded articles produced by subjecting the pellets of the thermoplastic resin compositions to injection molding were evaluated by the above methods. Tables 2A and 2B present the results. Reference example II-1 corresponds to Example I-1 described above.

[Table 2A]

| | | | | | Example | | | | | | | | |
|---|---|---|---|---|---|---|---|---|---|---|---|---|---|
| | | | | | II-1 | II-2 | II-3 | II-4 | II-5 | II-6 | II-7 | II-8 | II-9 |
| Formulation | Aromatic polycarbonate resin (A) | | | parts by mass | 50 | 50 | 50 | 40 | 80 | 40 | 40 | 60 | 60 |
| | Graft copolymer (B) | | B-1 | parts by mass | 20 | 20 | 20 | 20 | 10 | 30 | 15 | 10 | 30 |
| | (Meth)acrylate-based copolymer (C) | | C-1 | parts by mass | 30 | 30 | 30 | 40 | 10 | 30 | 45 | 30 | 10 |
| | | | C-2 | parts by mass | | | | | | | | | |
| | | | C-3 | parts by mass | | | | | | | | | |
| | | | C-4 | parts by mass | | | | | | | | | |
| | | | C-5 | parts by mass | | | | | | | | | |
| | NO-alkyl-type hindered amine-based light stabilizer (D) | | D-1 | parts by mass | 0.5 | 0.1 | 0.8 | 0.5 | 0.5 | 0.5 | 0.5 | 0.5 | 0.5 |
| | | | D-2 | parts by mass | | | | | | | | | |
| | Other hindered amine-based light stabilizer (d) | N-$CH_3$ type | d-1 | parts by mass | | | | | | | | | |
| | | N-H type | d-2 | parts by mass | | | | | | | | | |
| Impact resistance | | Izod impact strength (23°C) | ASTM D 256 | J/m | 640 | 580 | 710 | 650 | 850 | 750 | 470 | 700 | 850 |
| Durability | | Retention of Izod impact strength (after 200 hours) | | % | 60 | 55 | 50 | 60 | 50 | 62 | 65 | 50 | 50 |
| Color developability | | L* | SCE mode | L* | 4 | 4.5 | 3.8 | 5 | 5 | 5 | 4 | 4 | 5 |
| Weather resistance | | ΔE* | SCE mode | ΔE* | 14 | 15 | 13 | 11 | 17 | 11 | 11 | 15 | 16 |

[Table 2B]

| | | | | | Example | | | | | Reference example | Comparative example | |
|---|---|---|---|---|---|---|---|---|---|---|---|---|
| | | | | | II-10 | II-11 | II-12 | II-13 | II-14 | II-1 | II-1 | II-2 |
| Formulation | Aromatic polycarbonate resin (A) | | | parts by mass | 50 | 50 | 50 | 50 | 50 | 50 | 50 | 50 |
| | Graft copolymer (B) | | B-1 | parts by mass | 20 | 20 | 20 | 20 | 20 | 20 | 20 | 20 |
| | (Meth)acrylate-based copolymer (C) | | C-1 | parts by mass | | | | | 30 | 30 | 30 | 30 |
| | | | C-2 | parts by mass | 30 | | | | | | | |
| | | | C-3 | parts by mass | | 30 | | | | | | |
| | | | C-4 | parts by mass | | | 30 | | | | | |
| | | | C-5 | parts by mass | | | | 30 | | | | |
| | NO-alkyl-type hindered amine-based light stabilizer (D) | | D-1 | parts by mass | 0.5 | 0.5 | 0.5 | 0.5 | | | | |
| | | | D-2 | parts by mass | | | | | 0.5 | | | |
| | Other hindered amine-based light stabilizer (d) | N-$CH_3$ type | d-1 | parts by mass | | | | | | | 0.5 | |
| | | N-H type | d-2 | parts by mass | | | | | | | | 0.5 |
| Impact resistance | | Izod impact strength (23°C) | ASTM D 256 | J/m | 550 | 520 | 500 | 600 | 620 | 600 | 300 | 350 |
| Durability | | Retention of Izod impact strength (after 200 hours) | | % | 55 | 53 | 55 | 60 | 61 | 45 | 10 | 55 |
| Color developability | | L* | SCE mode | L* | 5 | 5 | 5 | 5 | 4 | 6 | 5 | 5 |
| Weather resistance | | ΔE* | SCE mode | ΔE* | 15 | 16 | 15 | 15 | 14 | 20 | 19 | 20 |

As presented in Examples II-1 to 14, the molded articles obtained from the thermoplastic resin compositions each containing the aromatic polycarbonate resin (A), the graft copolymer (B), the (meth)acrylate-based copolymer (C), and the NO-alkyl-type hindered amine-based light stabilizer (D) according to the present invention are excellent in impact resistance, color developability, durability, and weather resistance, and are suitable for the design of a wide variety of products.

In Reference example II-1, the NO-alkyl-type hindered amine-based light stabilizer (D) is not added; thus, the impact resistance durability, the color developability, and the weather resistance are poor.

In Comparative examples II-1 and 2, the N-$CH_3$-type or N-H-type hindered amine-based light stabilizer different from the NO-alkyl-type hindered amine-based light stabilizer (D) was used. The impact resistance, in particular, the durability is significantly poor.

While the present invention has been described in detail using a specific embodiment, it should be apparent to those skilled in the art that various modifications can be made without departing from the spirit and the scope of the present invention.

This application is based on Japanese Patent Application No. 2018-049691 filed March 16, 2018, which is hereby incorporated by reference herein in its entirety.

Industrial Applicability

The thermoplastic resin composition containing the aromatic polycarbonate resin (A), the graft copolymer (B), and the (meth)acrylate-based copolymer (C) according to the present invention is excellent in impact resistance, stiffness, heat resistance, and color developability (coloration properties) and thus enables the resulting molded article to have excellent appearance.

The thermoplastic resin composition containing the aromatic polycarbonate resin (A), the graft copolymer (B), the (meth)acrylate-based copolymer (C) and the NO-alkyl-type hindered amine-based light stabilizer (D) according to the present invention is excellent in impact resistance, color developability, durability, and weather resistance and thus enables the resulting molded article to have excellent appearance.

The molded article obtained by molding the thermoplastic resin composition of the present invention can be widely used in various fields, such as office automation apparatus fields, electronic and electrical apparatus fields, and automotive fields. For example, the molded article can be used in a wide variety of applications in accordance with the needs of the market and has very high industrial utility.

## Claims

1. A thermoplastic resin composition, comprising an aromatic polycarbonate resin (A), a graft copolymer (B) prepared by graft-polymerizing one or more vinyl-based monomers (Y) onto a rubbery polymer (X), and a (meth)acrylate-based copolymer (C) prepared by polymerizing a vinyl-based monomer mixture (m1) containing a (meth)acrylate-based monomer.

2. The thermoplastic resin composition according to Claim 1, wherein the vinyl-based monomer mixture (m1) contains an N-substituted maleimide-based monomer and/or an aromatic vinyl-based monomer.

3. The thermoplastic resin composition according to Claim 1 or 2, wherein 25 to 80 parts by mass of the aromatic polycarbonate resin (A), 10 to 30 parts by mass of the graft copolymer (B), and 10 to 45 parts by mass of the (meth)acrylate-based copolymer (C) are contained, based on 100 parts by mass in total of the aromatic polycarbonate resin (A), the graft copolymer (B), and the (meth)acrylate-based copolymer (C).

4. The thermoplastic resin composition according to any one of Claims 1 to 3, wherein the (meth)acrylate-based monomer is contained in an amount of 52% to 92% by mass based on 100% by mass in total of the vinyl-based monomer mixture (m1).

5. The thermoplastic resin composition according to any one of Claims 1 to 4, wherein the rubbery polymer (X) is a silicone/acrylic-based composite rubber, and the vinyl-based monomers (Y) contain an aromatic vinyl-based monomer and a vinyl cyanide-based monomer.

6. The thermoplastic resin composition according to any one of Claims 1 to 5, further comprising a NO-alkyl-type hindered amine-based light stabilizer (D).

7. The thermoplastic resin composition according to Claim 6, wherein an alkoxy group bonded to a nitrogen atom of the NO-alkyl-type hindered amine-based light stabilizer (D) has 5 to 15 carbon atoms, and the NO-alkyl-type hindered amine-based light stabilizer (D) has a molecular weight of 500 to 1,000.

8. The thermoplastic resin composition according to Claim 6 or 7, wherein the NO-alkyl-type hindered amine-based light stabilizer (D) is contained in an amount of 0.1 to 0.8 parts by mass based on 100 parts by mass in total of the aromatic polycarbonate resin (A), the graft copolymer (B), and the (meth)acrylate-based copolymer (C).

9. The thermoplastic resin composition according to Claim 5, wherein the silicone/acrylic-based composite rubber is a silicone/acrylic-based composite rubber in which a polyorganosiloxane (a) and an alkyl (meth)acrylate-based polymer (b) are composited, and
wherein 4% to 14% by mass of the polyorganosiloxane (a) and 96% to 86% by mass of the alkyl (meth)acrylate-based polymer (b) are contained, based on 100% by mass in total of the polyorganosiloxane (a) and the alkyl (meth)acrylate-based polymer (b).

10. The thermoplastic resin composition according to any one of Claims 1 to 9, wherein the graft copolymer (B) is prepared by graft-polymerizing 30 to 80 parts by mass of the vinyl-based monomers (Y) onto 20 to 70 parts by mass of the rubbery polymer (X) (provided that a total amount of the rubbery polymer (X) and the vinyl-based monomers (Y) is 100 parts by mass).

11. The thermoplastic resin composition according to any one of Claims 1 to 10, wherein 7% to 39% by mass of the N-substituted maleimide-based monomer and 13% or less by mass of the N-substituted maleimide-based monomer are contained, based on 100% by mass in total of the vinyl-based monomer mixture (m1).

12. A thermoplastic resin-molded article obtained by molding the thermoplastic resin composition according to any one of Claims 1 to 11.

## INTERNATIONAL SEARCH REPORT

International application No.
PCT/JP2019/009302

A. CLASSIFICATION OF SUBJECT MATTER
Int.Cl. C08L69/00(2006.01)i, C08K5/3435(2006.01)i, C08L33/04(2006.01)i, C08L51/04(2006.01)i, C08L51/08(2006.01)i

According to International Patent Classification (IPC) or to both national classification and IPC

B. FIELDS SEARCHED

Minimum documentation searched (classification system followed by classification symbols)
Int.Cl. C08L69/00, C08K5/3435, C08L33/04-33/16, C08L51/04, C08L51/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 64-79257 A (MITSUBISHI RAYON CO., LTD.) 24 March 1989, claims, page 3, upper right column, line 18 to lower left column, line 6, page 5, lower left column, line 20 to lower right column, line 9, page 5, lower right column, line 18 to page 6, upper left column, line 16, page 6, lower left column, line 2 to page 9, lower left column, line 9 & US 4888388 A, claims, column 3, line 67 to column 6, line 64, column 7, line 7 to column 16, line 53 & EP 307963 A2 & CA 1321431 A | 1-5, 9, 10-12<br>6-8, 10-12 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May 2019 (21.05.2019) | 04 June 2019 (04.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/009302

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2011-524449 A (BAYER MATERIALSCIENCE AG.) 01 September 2011, claims, paragraphs [0068], [0073]-[0093] & US 2009/0312482 A1, claims, paragraphs [0072], [0073], [0079]-[0106] & US 2012/0302694 A1 & WO 2009/152955 A1 & DE 102008028571 A1 & CA 2727744 A & KR 10-2011-0020823 A & CN 102066482 A & TW 201012873 A | 1-5, 9-12<br>6-8, 10-12 |
| Y<br>A | WO 2018/021164 A1 (MITSUBISHI ENGINEERING-PLASTICS CORPORATION) 01 February 2018, claims, paragraphs [0058]-[0061], [0098]-[0115] (Family: none) | 6-8, 10-12<br>1-5, 9 |
| Y<br>A | JP 2013-209629 A (TORAY INDUSTRIES, INC.) 10 October 2013, claims, paragraphs [0102]-[0107] (Family: none) | 6-8, 10-12<br>1-5, 9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012131908 A
- JP 6298935 B
- JP 2016125006 A
- JP 2018049691 A